# FASCICULE DE BREVET EUROPEEN

(11) **EP 2 764 608 B1**
(45) Date de publication et mention de la délivrance du brevet: **28.12.2016**
(21) Numéro de dépôt: 12779119.2
(22) Date de dépôt: 05.10.2012
(51) Int. Cl.: H02K 5/15, H02K 7/14

(54) **BOL POUR MOTEUR À INDUCTION ET MOTEUR À INDUCTION ÉQUIPÉ DE CE BOL**
GEHÄUSE FÜR EINEN INDUKTIONSMOTOR UND INDUKTIONSMOTOR MIT DIESEM GEHÄUSE
BOWL FOR INDUCTION MOTOR AND INDUCTION MOTOR EQUIPPED WITH SAID BOWL

(30) Priorité: 06.10.2011 FR 1159041
(43) Date de publication de la demande: 13.08.2014
(73) Titulaire: Somfy SAS, 74300 Cluses (FR)
(72) Inventeur: BRONDEX, Adrien, F-74700 Domancy (FR)
(74) Mandataire: Verriest, Philippe
(86) Numéro de dépôt international: PCT/FR2012/052269
(87) Numéro de publication internationale: WO 2013/050722

(56) Documents cités:
- EP-A1- 0 406 431
- EP-A1- 0 410 933
- EP-A2- 1 345 307
- US-A1- 2010 244 602

## Description

La présente invention concerne un moteur à induction, destiné à être placé à l'intérieur d'un actionneur tubulaire pour applications domotiques, permettant notamment de dérouler et/ou enrouler toiles, stores, écrans, ou volets roulants.

Les moteurs à induction comprennent classiquement un stator comprenant un alésage à l'intérieur duquel est disposé un rotor. Le stator comprend des dents réparties régulièrement sur sa paroi interne et séparées par des encoches. Les dents supportent des bobines, qui s'étendent dans les encoches. Les bobines permettent l'établissement d'un champ magnétique tournant provoquant la rotation du rotor. L'ensemble des bobines forme le bobinage.

Une partie du bobinage forme classiquement saillie au-delà des extrémités du stator. Ces saillies sont appelées têtes de bobinage ou chignons. Leur détérioration, pendant ou après assemblage, peut provoquer le dysfonctionnement du moteur. Aussi est il important de protéger les chignons pour la fiabilité du moteur.

Il est connu de protéger les chignons avec par exemple un organe de protection qui prévient leur contact avec l'arbre rotorique. Cependant, la protection offerte est généralement incomplète ; seule une partie des chignons est effectivement protégée. De plus, même si une protection est assurée pour le fonctionnement du moteur, au cours du montage du moteur les chignons peuvent demeurer découverts, donc exposés aux risques de blessure lors de l'assemblage de composants.

Enfin, il est souhaitable que les moteurs destinés à être logés dans des actionneurs pour applications domotiques émettent le moins de bruit possible pour le confort des utilisateurs. Ces moteurs tendent donc à être équipés d'organes de support et de guidage du rotor placés au plus près de ce dernier (pour limiter l'excentricité du rotor dans l'alésage statorique). Par conséquent, la localisation de ces organes de support et de guidage, au plus près du rotor et au voisinage immédiat des chignons, est source de risques supplémentaires de blessure des chignons. Alternativement, la détérioration des chignons par le bol lui-même lors de son montage est également un risque.

Le document US2010/244602 décrit un bol pour moteur connu dans l'art. Aussi la présente invention vise à pallier tout ou partie de ces inconvénients en proposant un bol capable de protéger un chignon et un moteur à induction comprenant ce bol, conciliant efficacement les impératifs de réduction du bruit et de protection des chignons, pendant et après assemblage de ses composants.

A cet effet, la présente invention a pour objet un bol pour moteur à induction destiné à être logé dans le corps creux d'un actionneur sensiblement longitudinal pour l'enroulement/déroulement de toiles, écrans, stores ou volets roulants, caractérisé en ce que le bol comprend une jupe extérieure et une jupe intérieure, la jupe extérieure et la jupe intérieure délimitant entre elles un espace destiné à recevoir un chignon d'un stator du moteur à induction, et en ce que la jupe intérieure est apte à se déformer de manière à restreindre l'espace entre la jupe intérieure et la jupe extérieure afin de permettre l'insertion à l'intérieur de la jupe intérieure de moyens de support d'un ensemble rotorique.

Ainsi, un bol selon l'invention offre un espace de protection d'une ouverture maximale lorsqu'il est monté contre le stator du moteur à induction, ce qui permet d'insérer aisément dans cet espace le chignon. Le montage ultérieur de moyens de support d'un ensemble rotorique, par exemple un palier, à l'intérieur de la jupe intérieure de ce bol, provoque la déformation de cette jupe intérieure. Cette déformation de la jupe intérieure conduit à une restriction de l'espace dans lequel se trouve le chignon. Ce dernier est délicatement repoussé, mais demeure protégé des moyens de support lors de leur mise en place et après cette mise en place.

Selon une autre caractéristique du bol selon l'invention, la jupe intérieure présente une forme sensiblement tronconique.

Selon une autre caractéristique du bol selon l'invention, la jupe intérieure est fendue d'une pluralité d'entailles qui délimitent entre elles des languettes aptes à fléchir lorsque les moyens de support sont insérés dans la jupe intérieure.

Selon encore une autre caractéristique du bol selon l'invention, celui-ci présente une base depuis laquelle s'étendent la jupe extérieure et la jupe intérieure, de sorte que le bol forme une seule et même pièce.

Selon un autre aspect de la présente invention, celle-ci a également pour objet un moteur à induction, capable d'être logé dans le corps creux d'un actionneur sensiblement longitudinal pour l'enroulement/déroulement de toiles, écrans, stores ou volets roulants, caractérisé en ce que le moteur comprend :
un stator,
un ensemble rotorique,
un bol ayant les caractéristiques précitées,
des moyens de support de l'ensemble rotorique, autorisant la rotation de l'ensemble rotorique par rapport au stator, disposés à l'intérieur de la jupe intérieure du bol,
la jupe intérieure étant capable de se déformer radialement lorsque les moyens de support y sont insérés.

Ainsi, le moteur à induction selon l'invention permet une protection complète du chignon, pendant et après assemblage des composants du moteur, tout en autorisant le placement des moyens de support du rotor au plus près de ce dernier pour réduire le bruit émis.

Avantageusement, une extrémité libre de la jupe intérieure délimite au repos un contour de diamètre inférieur au diamètre d'un alésage central du stator.

Ainsi, le contour délimité par l'extrémité libre ne risque pas de heurter le chignon (qui s'étend principalement entre la paroi intérieure et la paroi extérieure du stator) lors du montage du bol contre le stator.

Selon une forme d'exécution, les moyens de support comprennent une nervure extérieure dont le diamètre est supérieur au diamètre d'un alésage central du stator.

Selon un mode de réalisation, la jupe intérieure est fendue d'une pluralité d'entailles qui délimitent entre elles des languettes et le nombre de languettes est égal au nombre d'encoches statoriques du stator destinées à recevoir un bobinage.

Ainsi, il est possible de disposer chaque languette dans la prolongation de l'une des dents délimitée par les encoches statoriques. Cela limite le risque que le chignon passe en partie au travers des entailles de la jupe intérieure.

De manière avantageuse, la jupe extérieure comprend une pluralité de pattes conformées pour être insérées dans des évidements ménagés sur la paroi latérale extérieure du stator.

Cela permet de réduire les risques de mouvement relatif entre le bol et le stator.

Avantageusement, le moteur comprend un élément électriquement isolant interposé entre la jupe intérieure et les moyens de support.

Ainsi, les risques de court-circuit dû à un contact éventuel entre le chignon et un élément du moteur électriquement conducteur sont limités.

Selon un autre aspect de la présente invention, celle-ci a également pour objet un actionneur électromécanique sensiblement longitudinal pour l'enroulement/déroulement de toiles, écrans, stores ou volets roulants caractérisé en ce qu'il comprend
un moteur à induction ayant les caractéristiques précitées,
un corps creux, et en ce que
la jupe extérieure du bol du moteur présente une portée conformée pour venir en appui contre une paroi intérieure du corps creux de l'actionneur sensiblement longitudinal.

Ainsi, les risques de mouvement relatif entre le bol et le corps creux de l'actionneur longitudinal sont sensiblement réduits.

Ces caractéristiques et d'autres de la présente invention, ainsi que leurs avantages, ressortiront clairement de la description qui suit d'un mode de réalisation d'un moteur à induction selon l'invention, donné à titre d'exemple non limitatif, en faisant référence aux dessins annexés dans lesquels :
- La figure 1 montre un moteur à induction selon un mode particulier de réalisation de l'invention,
- La figure 2 montre un détail de la figure 1,
- Les figures 3 et 4 sont des vues en perspective d'un bol équipant un moteur à induction selon un mode de réalisation de l'invention,
- La figure 5 est une vue en coupe d'un bol équipant un moteur à induction selon un mode de réalisation de l'invention,
- La figure 6 est une vue en perspective d'un palier équipant un moteur à induction selon un mode de réalisation de l'invention,
- La figure 7 est une vue de profil d'un palier destiné à équiper un moteur à induction selon un mode de réalisation de l'invention,
- La figure 8 est un détail de la figure 7,
- La figure 9 est une vue en coupe selon la ligne I - I de la figure 7,
- La figure 10 est une vue de profil d'un ensemble comprenant un palier et un élément isolant destiné à équiper un moteur à induction selon un mode de réalisation de l'invention,
- La figure 11 est une vue de dessus de l'ensemble comprenant un palier et un élément isolant destiné à équiper un moteur à induction selon un mode de réalisation de l'invention,
- La figure 12 est une vue en coupe selon la ligne II - II de la figure 11,
- La figure 13 est un détail de la figure 12.

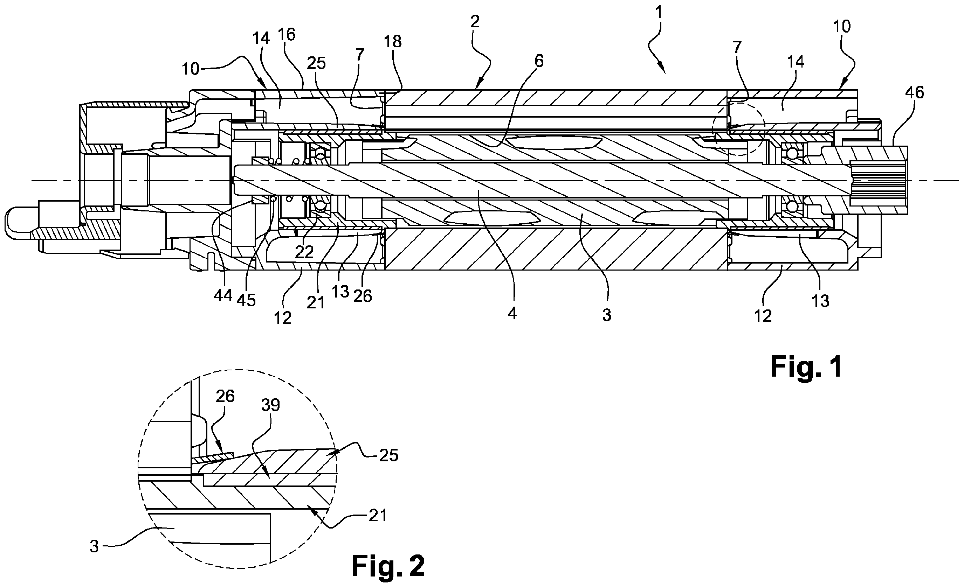

La figure 1 montre un moteur 1 à induction selon un mode particulier de réalisation de l'invention. Le moteur 1 peut être à double sens de rotation. Il comprend notamment un stator 2 et un ensemble rotorique. L'ensemble rotorique comporte un rotor 3, par exemple à cage d'écureuil. Le rotor 3 est solidaire d'un arbre 4.

Le moteur 1 est destiné à être inséré dans le corps creux d'un actionneur (non représenté) sensiblement longitudinal. Cet actionneur est destiné à être fixé à un bâtiment, horizontalement, et à servir à des applications domotiques, par exemple l'enroulement/déroulement de toiles, d'écrans, de stores ou de volets roulants. Ainsi, le moteur 1 est de forme sensiblement tubulaire. Autrement dit, la longueur du stator 2 est généralement plus importante que son diamètre extérieur.

Le stator 2 peut comprendre un paquet de tôles formant un alésage central 6. Le rotor 3 est disposé à l'intérieur de l'alésage central 6.

Le stator 2 est centré dans le corps creux de l'actionneur longitudinal.

Le stator 2 comprend, sur la circonférence de son alésage central 6, une pluralité de rainures (non visibles) s'étendant axialement et débouchant à chaque extrémité 7 du stator 2. Ces rainures sont également appelées encoches statoriques.

Les encoches statoriques délimitent entre elles des dents (non visibles) autour desquelles sont enroulées des bobines. L'ensemble des bobines forme le bobinage.

Une partie du bobinage s'étend généralement au-delà des extrémités 7 du stator 2, et forme des excroissances ou saillies appelées chignons. Ainsi, le stator 2 présente à chaque extrémité 7 un chignon (non représenté). Afin d'éviter le dysfonctionnement du moteur 1, les chignons doivent être protégés et isolés.

Le moteur 1 comprend des moyens de protection de chaque chignon. Dans l'exemple des figures 1 à 5, les moyens de protection comprennent un bol 10 formant boîtier de protection. Dans le mode de réalisation illustré aux différentes figures, le bol 10 présente une base 11 depuis laquelle s'étendent une jupe extérieure 12 et une jupe intérieure 13, de sorte que le bol 10 forme une seule et même pièce.

Selon un mode de réalisation alternatif, le bol 10 peut être formé en deux pièces distinctes destinées à être assemblées, l'une de ces pièces comprenant la jupe extérieure 12 et l'autre de ces pièces comprenant la jupe intérieure 13.

La jupe extérieure 12 et la jupe intérieure 13 délimitent entre elles un espace 14, dans lequel s'étend chaque chignon. Le moteur 1 présenté à la figure 1 comprend deux bols 10, à chaque extrémité 7 du stator 2. Les deux bols 10 sont similaires, et sont disposés symétriquement de part et d'autre du stator 2. Les bols 10 peuvent être réalisés en matière isolante souple ou rigide déformable. En particulier, la jupe intérieure 13 est déformable sous l'action d'un effort radial centrifuge.

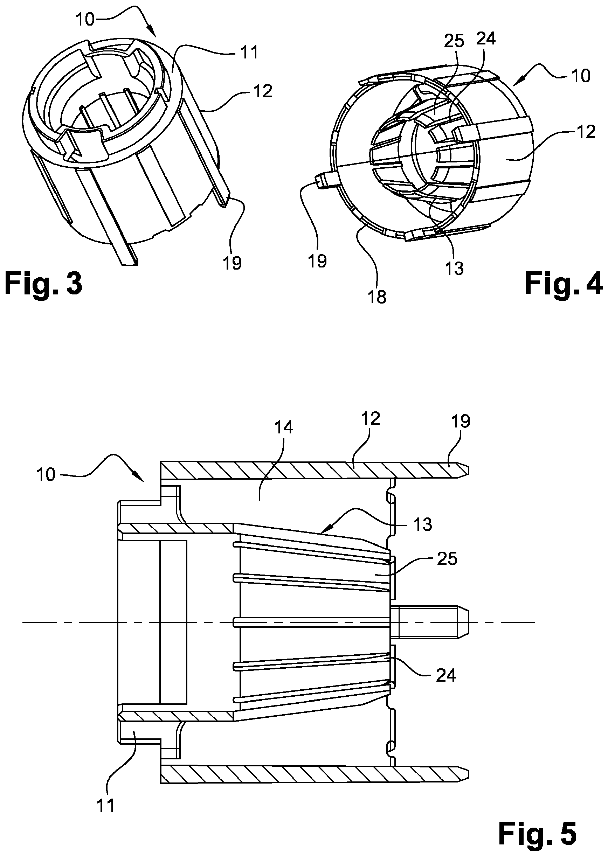

La jupe extérieure 12 comprend une portée 16. La portée 16 est conformée pour venir en appui contre la paroi intérieure du corps creux de l'actionneur longitdunal dans lequel est destiné à être inséré le moteur 1. Dans le mode de réalisation illustré aux figures 3 à 5, la jupe extérieure 12 présente une forme cylindrique.

A l'opposé de la base 11, la jupe extérieure 12 présente un contour 18 destiné à venir en appui contre une des extrémités 7 du stator 2. Selon le mode de réalisation des figures 3 à 5, le contour 18 comprend une pluralité de pattes 19. Les pattes 19 s'étendent dans le prolongement de la jupe extérieure 12. Chaque patte 19 est conformée pour être logée dans un évidement (non visible) ménagé sur la circonférence extérieure du stator 2. Ainsi, les pattes 19 préviennent tout mouvement relatif radial entre le stator 2 et chaque bol 10. De plus, la jupe extérieure 12 est conformée pour épouser la forme de la paroi intérieure du corps creux de l'actionneur longitudinal. Ansi, grâce à la jupe extérieure 12, les bols 10 permettent de centrer le stator 2 dans l'actionneur longitudinal.

Chaque jupe intérieure 13 permet de protéger un chignon pendant et après l'assemblage du moteur 1. Selon le mode de réalisation illustré aux figures 3 à 5, la jupe intérieure 13 présente une forme tronconique. L'intérieur de la jupe intérieure 13 est destiné à recevoir des moyens de support de l'arbre 4. Les moyens de support peuvent comprendre un palier 21 et un roulement 22 (par exemple à billes) qui seront décrits plus en détail ci-après.

La jupe intérieure 13 est capable de se déformer lorsque les moyens de support sont mis en place. Lors de l'assemblage du bol 10 au stator 2, la jupe intérieure 13 est dans une position de repos: elle n'est pas déformée, car les moyens de support sont absents. Par conséquent, l'espace 14 présente une ouverture maximale. L'ouverture maximale de l'espace 14 facilite la mise en place de chaque bol 10 sans risque de blesser le chignon.

Comme illustré aux figures 3 à 5, la jupe intérieure 13 est fendue d'une pluralité d'entailles 24. Deux entailles 24 successives délimitent entre elles une languette 25.

Les languettes 25 présentent une extrémité liée à la base 11 et une extrémité libre. Elles sont aptes à se déformer lorsque les moyens de support de l'ensemble rotorique sont insérés dans la jupe intérieure 13. Les extrémités libres des languettes 25 délimitent un contour de diamètre inférieur au diamètre de l'alésage central 6. Le diamètre de ce contour est aussi inférieur au plus grand diamètre extérieur du palier 21.

Le moteur 1 peut comprendre des cales 26 représentées sur la figure 2, disposées à chaque extrémité 7 statorique et destinées à servir d'isolation électrique au stator. Ces cales 26 ne doivent pas être déplacées ou dégradées lors du montage (demande des normes UL et européennes).

Le nombre de languettes 25 peut être égal au nombre d'encoches statoriques et au nombre de dents du stator 2. Le cas échéant, chaque languette 25 est disposée dans la prolongation de l'une des dents du stator 2. Le risque qu'une partie du chignon traverse une des entailles 24 et soit abîmé est ainsi amoindri.

Alternativement, pour un même résultat, la jupe intérieure 13 est fabriquée à partir de plastique à mémoire de forme. Elle est ainsi capable de se déformer lorsque les moyens de support sont mis en place, protégeant ainsi les chignons tout en venant en appui sur le palier 21.

Le moteur 1 représenté sur la figure 1 comprend deux paliers 21 similaires, et deux roulements 22. Les paliers 21 et les roulements 22 sont placés symétriquement de part et d'autre du stator 2. Les paliers 21 sont par exemple fariqués en métal fritté ou en métal usiné.

Lors de l'insertion du bol 10 par-dessus les chignons, le diamètre de l'extrémité libre de la jupe intérieure 13 étant inférieur au diamètre de l'alésage central 6, le risque de déplacer axialement les cales 26 ou de blesser les chignons est très faible voire inexistant.

Chaque palier 21 est ensuite disposé à l'intérieur de l'une des jupes intérieures 13. Lorsque le palier 21 est en place dans la jupe intérieure 13 correspondante, celle-ci présente une déformation essentiellement radiale. L'espace 14 est alors restreint, mais les cales 26 et le chignon ont été protégés au cours de la mise en place des moyens de support. En effet les extrémités libres des languettes 25 viennent repousser radialement les cales 26 et les chignons, sans les déplacer axialement. De plus, grâce à cette configuration, les moyens de support peuvent être placés au plus près du stator 2 pour un meilleur guidage.

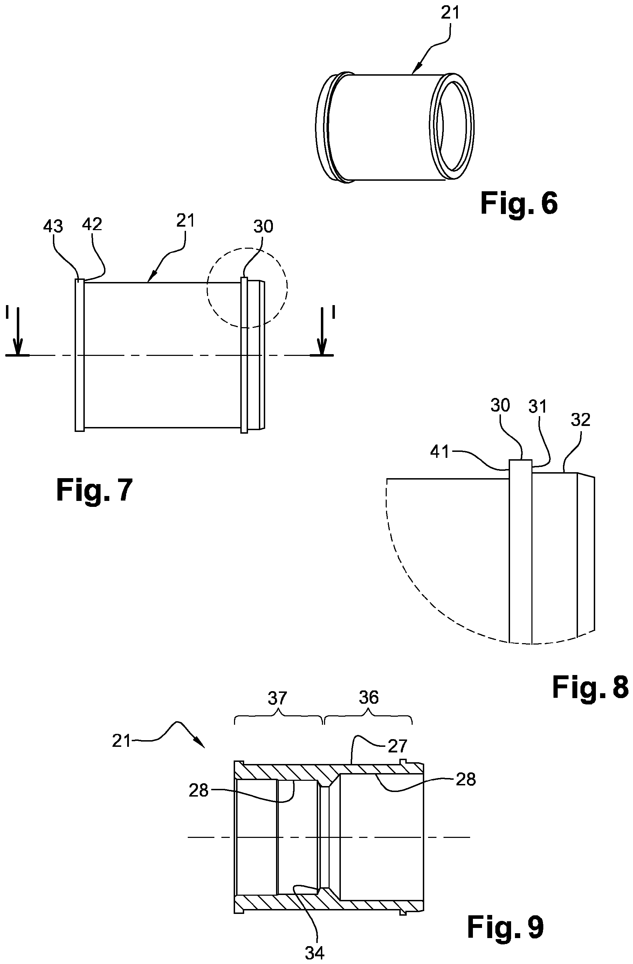

Comme cela est visible sur les figures 6 à 9, chaque palier 21 peut être de forme sensiblement cylindrique. Chaque palier 21 comprend une paroi extérieure 27 et une paroi intérieure 28.

La paroi extérieure 27 comprend une nervure annulaire 30. La nervure annulaire 30 est agencée pour former un premier épaulement 31. Le premier épaulement 31 est destiné à venir en appui direct contre l'une des extrémités 7 du stator 2.

La nervure annulaire 30 est également agencée pour former une portée 32. La portée 32 est destinée à venir en appui direct contre une paroi intérieure de l'alésage central 6.

Ainsi, chaque palier 21 est en appui direct axial d'une part, et en appui direct radial d'autre part, contre le stator 2. Ces appuis directs réduisent la chaîne de cotes entre le rotor 3 et le stator 2. Ils permettent donc un meilleur centrage du rotor 3 dans l'alésage central 6. Cela limite les problèmes de bruit dus à l'excentricité du rotor 3 et du stator 2.

La paroi intérieure 28 comprend un épaulement 34. Chaque roulement 22 est destiné à venir à proximité ou en appui contre l'épaulement 34 correspondant. En principe, un jeu est laissé au montage entre le roulement et l'épaulement pour ne pas risquer de dégrader le roulement lors de la mise en place sous contrainte ainsi que lors d'une chute éventuelle de l'actionneur. L'épaulement 34 est orienté vers l'extérieur, c'est-à-dire opposé au stator 2, de sorte que le montage des roulements 22 s'effectue après celui des paliers 21.

L'épaulement 34 marque la démarcation d'un premier tronçon 36 et d'un deuxième tronçon 37 de palier 21. Le diamètre intérieur du premier tronçon 36 est supérieur au diamètre intérieur du deuxième tronçon 37, de sorte que le rotor 3 s'étend partiellement dans le premier tronçon 36 de chaque palier 21. Ces différentes démarcations permettent de garantir la rigidité du palier 21 tout en accommodant l'extrémité du rotor.

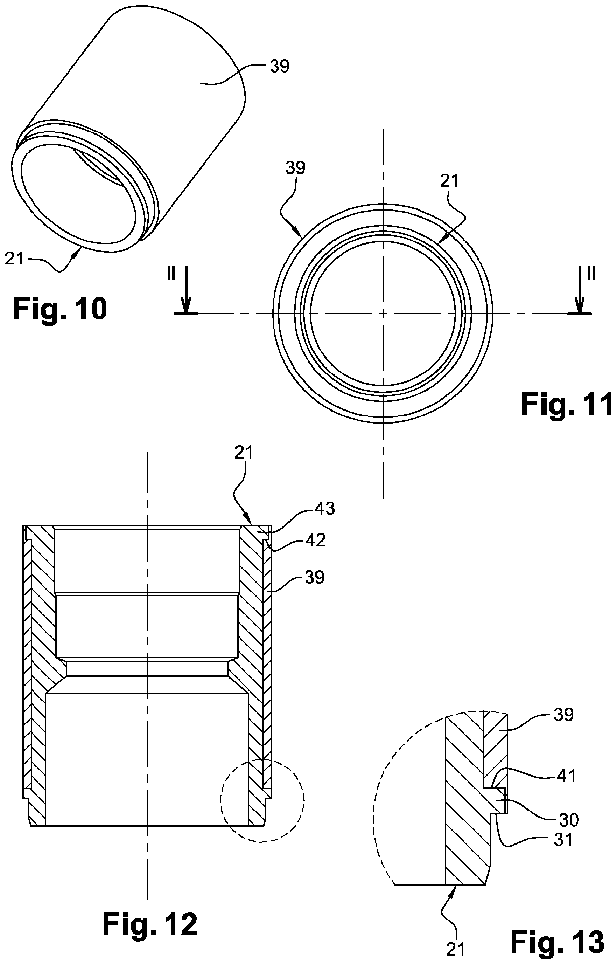

Le moteur 1 peut comprendre un élément 39 électriquement isolant, visible par exemple sur les figures 10 à 13. L'élément 39 électriquement isolant est destiné à recouvrir la paroi extérieure 27 de chaque palier 21 afin de prévenir un contact électrique de nature à provoquer un court-circuit entre un chignon et un élément électriquement conducteur du moteur 1. Une sécurité électrique peut être réalisée par l'élément 39.

Comme cela est représenté sur la figure 12, la paroi extérieure 27 du palier 21 peut comprendre un deuxième épaulement 41, également formé par la nervure annulaire 30, et un troisième épaulement 42, formé par une collerette 43. L'élément 39 électriquement isolant est conformé pour coopérer avec le deuxième épaulement 41 et le troisième épaulement 42. Le deuxième épaulement 41 et le troisième épaulement 42 permettent de positionner et maintenir axialement en position l'élément 39 électriquement isolant.

L'élément 39 électriquement isolant peut être surmoulé. Il recouvre avantageusement la nervure annulaire 30 et la collerette 43, comme cela est visible sur les figures 10 à 13.

Afin de bloquer les roulements 22 à l'intérieur de chaque palier 21, le moteur 1 peut comprendre un organe 44 d'appui solidaire d'une extrémité de l'arbre 4 rotorique, et des moyens de rappel, par exemple un ressort 45 précontraint, prenant appui contre l'organe 44 et tendant à repousser le roulement 22 vers l'épaulement 34. A une autre extrémité de l'arbre 4 rotorique, un entraîneur 46, destiné à coopérer avec un réducteur (non représenté), peut être monté serré sur l'arbre 4, en appui éventuel sur le roulement 22 correspondant.

L'assemblage du moteur 1 à induction est décrit ci-après.

Il s'agit d'abord de mettre en place les bols 10 contre chaque extrémité 7 du stator 2 afin de protéger les chignons en les logeant dans l'espace 14 délimité entre la jupe extérieure 12 et la jupe intérieure 13 de chaque bol 10. A ce stade, les jupes intérieures 13 ne sont pas déformées. L'espace 14 présente donc une ouverture maximale qui permet d'y insérer les chignons sans danger.

Il s'agit ensuite de mettre en place les moyens de support de l'ensemble rotorique, à un côté du stator 2. Cette étape consiste donc à insérer d'abord un palier 21 dans le bol 10 correspondant, avantageusement en l'appuyant directement contre le stator 2. La mise en place du palier 21 provoque la déformation progressive de la jupe intérieure 13 dans laquelle il est inséré. Le chignon au contact de la jupe intérieure 13 est délicatement repoussé mais reste protégé du palier 21. Cette étape consiste également, dans la forme de réalisation présentée sur la figure 1, à insérer un roulement 22 dans le palier 21, et à chasser ce roulement 22 vers l'épaulement 34. Il est à noter que le palier 21 et le roulement 22 sont insérés de l'extérieur vers l'intérieur, c'est-à-dire en direction du stator 2.

Il reste à contraindre ce roulement 22 pour le maintenir plaqué dans la direction de l'épaulement 34, mettre en place sur le rotor 3 les moyens de support destinés à être disposés de l'autre côté du stator 2, puis insérer le rotor 3 sur lequel on vient de placer un palier 21 dans l'autre bol 10 et l'alésage central 6 du stator 2. Au cours de cette insertion, le palier 21 préalablement disposé sur le rotor 3 repousse les languettes 25 de la jupe intérieure 13 de cet autre bol 10.

Bien entendu, l'invention n'est nullement limitée au mode de réalisation décrit ci-dessus, ce mode de réalisation n'ayant été donné qu'à titre d'exemple. Des modifications restent possibles, notament du point de vue de la constitution des divers éléments ou par la substitution d'équivalents techniques, sans sortir pour autant du domaine de protection de l'invention.

## Revendications

1. Bol (10) pour moteur (1) à induction destiné à être logé dans le corps creux d'un actionneur sensiblement longitudinal pour l'enroulement/déroulement de toiles, écrans, stores ou volets roulants, **caractérisé en ce que** le bol (10) comprend une jupe extérieure (12) et une jupe intérieure (13), la jupe extérieure (12) et la jupe intérieure (13) délimitant entre elles un espace (14) destiné à recevoir un chignon d'un stator (2) du moteur (1) à induction, et **en ce que** la jupe intérieure (13) est apte à se déformer de manière à restreindre l'espace (14) entre la jupe intérieure (13) et la jupe extérieure (12) afin de permettre l'insertion à l'intérieur de la jupe intérieure (13) de moyens de support d'un ensemble rotorique.

2. Bol (10) selon la revendication 1, **caractérisé en ce que** la jupe intérieure (13) présente une forme sensiblement tronconique.

3. Bol (10) selon la revendication 1 ou 2, **caractérisé en ce que** la jupe intérieure (13) est fendue d'une pluralité d'entailles (24) qui délimitent entre elles des languettes (25) aptes à fléchir lorsque les moyens de support sont insérés dans la jupe intérieure (13).

4. Bol (10) selon l'une des revendications 1 à 3, **caractérisé en ce qu'**il présente une base (11) depuis laquelle s'étendent la jupe extérieure (12) et la jupe intérieure (13), de sorte que le bol (10) forme une seule et même pièce.

5. Moteur (1) à induction, capable d'être logé dans le corps creux d'un actionneur sensiblement longitudinal pour l'enroulement/déroulement de toiles, écrans, stores ou volets roulants, **caractérisé en ce que** le moteur (1) comprend :
un stator (2),
un ensemble rotorique,
un bol (10) selon l'une des revendications 1 à 4,
des moyens de support de l'ensemble rotorique, autorisant la rotation de l'ensemble rotorique par rapport au stator (2), disposés à l'intérieur de la jupe intérieure (13) du bol (10),
la jupe intérieure (13) étant capable de se déformer radialement lorsque les moyens de support y sont insérés.

6. Moteur (1) à induction selon la revendication 5, **caractérisé en ce qu'**une extrémité libre de la jupe intérieure (13) délimite au repos un contour de diamètre inférieur au diamètre d'un alésage central (6) du stator (2).

7. Moteur (1) à induction selon l'une des revendications 5 ou 6, **caractérisé en ce que** les moyens de support comprennent une nervure (30) extérieure dont le diamètre est supérieur au diamètre d'un alésage central (6) du stator (2).

8. Moteur (1) à induction selon l'une des revendications 5 à 7, **caractérisé en ce que** la jupe intérieure (13) est fendue d'une pluralité d'entailles (24) qui délimitent entre elles des languettes (25) et **en ce que** le nombre de languettes (25) est égal au nombre d'encoches statoriques du stator (2) destinées à recevoir un bobinage.

9. Moteur (1) à induction selon l'une des revendications 5 à 8, **caractérisé en ce que** la jupe extérieure (12) comprend une pluralité de pattes (19) conformées pour être insérées dans des évidements ménagés sur la paroi latérale extérieure du stator (2).

10. Moteur (1) à induction l'une des revendications 5 à 9, **caractérisé en ce qu'**il comprend un élément (39) électriquement isolant interposé entre la jupe intérieure (13) et les moyens de support.

11. Actionneur électromécanique sensiblement longitudinal pour l'enroulement/déroulement de toiles, écrans, stores ou volets roulants **caractérisé en ce qu'**il comprend
un moteur (1) à induction selon l'une des revendications 5 à 10,
un corps creux, et **en ce que**
la jupe extérieure (12) du bol (10) du moteur (1) présente une portée (16) conformée pour venir en appui contre une paroi intérieure du corps creux de l'actionneur sensiblement longitudinal.

## Patentansprüche

1. Schale (10) für einen Induktionsmotor (1), der dazu bestimmt ist, in den Hohlkörper eines im Wesentlichen in Längsrichtung verlaufenden Stellers zum Aufrollen/Abrollen von Tüchern, Leinwänden, Stores oder Rollläden eingesetzt zu werden, **dadurch gekennzeichnet, dass** die Schale (10) eine äußere Schürze (12) und eine innere Schürze (13) umfasst, wobei die äußere Schürze (12) und die innere Schürze (13) zwischen sich einen Raum (14) eingrenzen, der dazu bestimmt ist, ein Paket eines Stators (2) des Induktionsmotors (1) aufzunehmen, und dadurch, dass die innere Schürze (13) imstande ist, sich derart zu verformen, um den Raum (14) zwischen der inneren Schürze (13) und der äußeren Schürze (12) einzuengen, um das Einführen von Stützmitteln einer Rotorbaugruppe ins Innere der inneren Schürze (13) zu ermöglichen.

2. Schale (10) nach Anspruch 1, **dadurch gekennzeichnet, dass** die innere Schürze (13) eine im Wesentlichen kegelige Form aufweist.

3. Schale (10) nach Anspruch 1 oder 2, **dadurch gekennzeichnet, dass** die innere Schürze (13) durch eine Vielzahl von Einschnitten (24) geschlitzt ist, die zwischen sich Laschen (25) eingrenzen, die imstande sind, sich zu biegen, wenn die Stützmittel in die innere Schürze (13) eingeführt werden.

4. Schale (10) nach einem der Ansprüche 1 bis 3, **dadurch gekennzeichnet, dass** sie eine Basis (11) aufweist, aus der sich die äußere Schürze (12) und die innere Schürze (13) erstrecken, sodass die Schale (10) ein einziges Teil bildet.

5. Induktionsmotor (1), der fähig ist, in den Hohlkörper eines im Wesentlichen in Längsrichtung verlaufenden Stellers zum Aufrollen/Abrollen von Tüchern, Leinwänden, Stores oder Rollläden eingesetzt zu werden, **dadurch gekennzeichnet, dass** der Motor (1) Folgendes umfasst:
einen Stator (2),
eine Rotorbaugruppe,
eine Schale (10) nach einem der Ansprüche 1 bis 4,
Stützmittel der Rotorbaugruppe, welche die Rotation der Rotorbaugruppe im Verhältnis zum Stator (2) zu erlauben, die im Inneren der inneren Schürze (13) der Schale (10) angeordnet sind,
wobei die innere Schürze (13) fähig ist, sich radial zu verformen, wenn die Stützmittel eingeführt werden.

6. Induktionsmotor (1) nach Anspruch 5, **dadurch gekennzeichnet, dass** ein freies Ende der inneren Schürze (13) im Ruhezustand eine Kontur mit einem Durchmesser eingrenzt, der kleiner ist, als der Durchmesser einer zentralen Bohrung (6) des Stators (2).

7. Induktionsmotor (1) nach einem der Ansprüche 5 oder 6, **dadurch gekennzeichnet, dass** die Stützmittel eine äußere Rippe (30) umfassen, deren Durchmesser größer ist, als der Durchmesser einer zentralen Bohrung (6) des Stators (2).

8. Induktionsmotor (1) nach einem der Ansprüche 5 bis 7, **dadurch gekennzeichnet, dass** die innere Schürze (13) durch eine Vielzahl von Einschnitten (24) geschlitzt ist, die zwischen sich Laschen (25) eingrenzen, und dadurch, dass die Anzahl der Laschen (25) gleich der Anzahl der Statorinkerbungen des Stators (2) ist, die dazu bestimmt sind, eine Spule aufzunehmen.

9. Induktionsmotor (1) nach einem der Ansprüche 5 bis 8, **dadurch gekennzeichnet, dass** die äußere Schürze (12) eine Vielzahl von Lappen (19) umfasst, die ausgeformt sind, um in Ausnehmungen eingeführt zu werden, die in die äußere Seitenwand des Stators (2) eingearbeitet sind.

10. Induktionsmotor (1) nach einem der Ansprüche 5 bis 9, **dadurch gekennzeichnet, dass** er ein elektrisch isolierendes Element (39) umfasst, das zwischen der inneren Schürze (13) und den Stützmitteln eingeführt wird.

11. Im Wesentlichen in Längsrichtung verlaufender elektromechanischer Steller zum Aufrollen/Abrollen von Tüchern, Leinwänden, Stores oder Rollläden, **dadurch gekennzeichnet, dass** er Folgendes umfasst
einen Induktionsmotor (1) nach einem der Ansprüche 5 bis 10,
einen Hohlkörper, und dadurch dass
die äußere Schürze (12) der Schale (10) des Motors (1) eine Tragweite (16) aufweist, die ausgeformt ist, um sich an einer Innenwand des Hohlkörpers des im Wesentlichen in Längsrichtung verlaufenden Stellers anzulegen.

## Claims

1. A bowl (10) for an induction motor (1) intended to be housed in the hollow body of a substantially longitudinal actuator for the rolling/unrolling of canvases, screens, blinds or roller shutters, **characterized in that** the bowl (10) comprises an outer skirt (12) and an inner skirt (13), the outer skirt (12) and the inner skirt (13) delimiting therebetween a space (14) intended to receive a leading-out wire of a stator (2) of the induction motor (1), and **in that** the inner skirt (13) is adapted to be deformed so as to restrict the space (14) between the inner skirt (13) and the outer skirt (12) in order to allow inserting, inside the inner skirt (13), means for supporting a rotor assembly.

2. The bowl (10) according to claim 1, **characterized in that** the inner skirt (13) has a substantially truncated cone shape.

3. The bowl (10) according to claim 1 or 2, **characterized in that** the inner skirt (13) is slotted with a plurality of notches (24) which delimit therebetween tongues (25) capable of flexing when the support means are inserted in the inner skirt (13).

4. The bowl (10) according to any of claims 1 to 3, **characterized in that** it has a base (11) from which the outer skirt (12) and the inner skirt (13) extend, so that the bowl (10) forms one and the same part.

5. An induction motor (1), capable of being housed in the hollow body of a substantially longitudinal actuator for the rolling/unrolling of canvases, screens, blinds or roller shutters, **characterized in that** the motor (1) comprises:
a stator (2),
a rotor assembly,
a bowl (10) according to any of claims 1 to 4,
means for supporting the rotor assembly, enabling the rotation of the rotor assembly relative to the stator (2), disposed inside the inner skirt (13) of the bowl (10),
the inner skirt (13) being adapted to be radially deformed when the support means are inserted therein.

6. The induction motor (1) according to claim 5, **characterized in that** a free end of the inner skirt (13) delimits at rest an outline having a diameter smaller than the diameter of a central bore (6) of the stator (2).

7. The induction motor (1) according to any of claims 5 or 6, **characterized in that** the support means comprise an outer rib (30) whose diameter is greater than the diameter of a central bore (6) of the stator (2).

8. The induction motor (1) according to any of claims 5 to 7, **characterized in that** the inner skirt (13) is slotted with a plurality of notches (24) which delimit therebetween tongues (25) and **in that** the number of tongues (25) is equal to the number of stator slots of the stator (2) intended to receive a winding.

9. The induction motor (1) according to any of claims 5 to 8, **characterized in that** the outer skirt (12) comprises a plurality of tabs (19) shaped to be inserted in arranged recesses on the outer side wall of the stator (2).

10. The induction motor (1) according to any of claims 5 to 9, **characterized in that** it comprises an electrically insulating element (39) interposed between the inner skirt (13) and the support means.

11. A substantially longitudinal electromechanical actuator for the rolling/unrolling of canvases, screens, blinds or roller shutters, **characterized in that** it comprises
an induction motor (1) according to any of claims 5 to 10,
a hollow body, and **in that**
the outer skirt (12) of the bowl (10) of the motor (1) has a bearing (16) shaped to rest against an inner wall of the hollow body of the substantially longitudinal actuator.
